(19) **Europäisches Patentamt**

**European Patent Office**

**Office européen des brevets**

(11) **EP 1 568 186 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
**H04L 25/02** (2006.01)

(21) Anmeldenummer: **03767534.5**

(22) Anmeldetag: **12.11.2003**

(86) Internationale Anmeldenummer:
**PCT/EP2003/012655**

(87) Internationale Veröffentlichungsnummer:
**WO 2004/051865 (17.06.2004 Gazette 2004/25)**

(54) **VERFAHREN ZUR ANALYSE DER KANALIMPULSANTWORT EINES ÜBERTRAGUNGSKANALS**

METHOD FOR ANALYSING THE CHANNEL IMPULSE RESPONSE OF A TRANSMISSION CHANNEL

PROCEDE D'ANALYSE DE LA REPONSE IMPULSIONNELLE D'UN CANAL DE TRANSMISSION

(84) Benannte Vertragsstaaten:
**DE FR GB IT**

(30) Priorität: **03.12.2002 DE 10256452**

(43) Veröffentlichungstag der Anmeldung:
**31.08.2005 Patentblatt 2005/35**

(73) Patentinhaber: **Rohde & Schwarz GmbH & Co. KG 81671 München (DE)**

(72) Erfinder: **HOFMEISTER, Martin 81541 München (DE)**

(74) Vertreter: **Körfer, Thomas
Mitscherlich & Partner,
Patent- und Rechtsanwälte,
Sonnenstrasse 33
80331 München (DE)**

(56) Entgegenhaltungen:
**EP-A- 0 402 145       DE-A- 10 052 718**

- **SAMUEL D. STEARNS: "Digitale Verarbeitung analoger Signale" 1979, R. OLDENBOURG VERLAG MÜNCHEN WIEN 1979 , MÜNCHEN , XP002273721 Kapitel 5, Seiten 76-104 Kapitel 9, Seiten 162-188**

**Beschreibung**

Bei der Übertragung eines beliebigen Signals über verschiedene Übertragungswege muß meist von einem nichtidealen Übertragungskanal ausgegangen werden. Auf dem Weg zum Empfänger kann das Signal z.B. an Verbindungsstellen oder Hindernissen gedämpft und reflektiert werden. Bei zeitdiskreten Systemen wird dieses Signal in einem A-D-Wandler mit einem festen Takt abgetastet, durch Resampling auf das n-fache der Abtastrate (bzw. des Symboltaktes) synchronisiert und der jeweilige Signalpegel einem Symbolwert zugeordnet. Ist der Übertragungskanal nichtideal, führt dies zu kleinen Augenöffnungen und im Extremfall zu einer falschen Symbol-Zuordnung. Um lineare Fehler des Übertragungskanals zu kompensieren, muß ein Empfänger einen Equalizer enthalten. Dieser weist ein Systemverhalten auf, das bei exakter Kompensation des Linearitätsfehlers genau invers zum Übertragungsverhalten des Übertragungskanals wirkt.

Im Hinblick auf eine bessere Empfangsqualität der Nachrichtenübertragung sind neben der kontinuierlichen Kompensation der Linearitätsfehler durch einen im Empfänger integrierten Entzerrer (Equalizer) generelle Maßnahmen zur Beseitigung bzw. Einschränkung von Übertragungsstörungen zu ergreifen.

Lösungsansätze, die diesbezüglich den Stand der Technik darstellen, werden in dem Fachbuch K.D. Kammeyer, "Nachrichtenübertragung", ISBN 3-519-16142-7, Stuttgart, 1996, S. 196-205, vorgestellt. Hierbei handelt es sich um Verfahren, in denen auf der Basis von pseudozufälligen Sendedatenfolgen und den dazugehörigen, am Ende des Übertragungskanals empfangenen Datenfolgen über iterative Optimierungs-Algorithmen die für eine optimale Entzerrung notwendigen Koeffizienten eines nachgeschalteten Entzerrers (Equalizers) berechnet werden. Eine zweistufige Methode, mittels derer im ersten Schritt die Kanalimpulsantwort ermittelt wird und im zweiten Schritt aus der Kanalimpulsantwort die Koeffizienten der Kanalübertragungsfunktion berechnet werden, die bei exakter Entzerrung des Übertragungskanals spiegelbildlich zu den Koeffizienten des Equalizer sind, liegt nicht vor.

Im Dokument DE 100 52 718 A wird ein Verfahren zur Ermittlung der Kanalimpulsantwort aus den IIR- und FIR-Filterkoeffizienten offenbart.

Der Erfindung liegt die Aufgabe zugrunde, ein Verfahren zu entwickeln, bei dem im Hinblick auf eine Laufzeitmessung zur Detektion von Hindernissen im Übertragungskanal die Kanalimpulsantwort unter Ausnutzung vorhandener Informationen im Entzerrer des Empfängers ermittelt wird.

Die Aufgabe wird durch die Merkmale des Anspruchs 1 gelöst.

Als Ausgangspunkt des erfindungsgemäßen Verfahrens liegen die Filterkoeffizienten des Entzerrers (Equalizers) bereits vor. Diese können mit einem adaptiven Verfahren, z.B. nach Kammeyer, a.a.O., ermittelt werden. Da eine vollständige Entzerrung des durch den Übertragungskanal linear verzerrten Übertragungssignals durch den Entzerrer (Equalizer) vorausgesetzt wird, ist die Kanalübertragungsfunktion invers zur Übertragungsfunktion des Entzerrers (Equalizers). Deshalb entsprechen nach Vertauschung von Nenner- und Zählerterm der Equalizer-Übertragungsfunktion die Koeffizienten der Kanalübertragungsfunktion genau den Koeffizienten der Equalizer-Übertragungsfunktion. Die Berechnung der Stützwerte der Kanalimpulsantwort mit Hilfe der inversen z-Transformation aus der z-Transformierten des Übertragungskanals erfolgt nach der Beziehung:

$$I_K(n) = (1/2\pi j)\oint H_K(z) * z^{n-1} dz \qquad\qquad (1)$$

Existierende numerische Verfahren zur Lösung von Ringintegralen für die industrielle Praxis sind einerseits zu aufwendig und weisen andererseits keine für dievorliegende Anwendung ausreichende Genauigkeit auf. Die Erfindung umgeht diese Schwierigkeit, indem für die Berechnung der diskreten Abtastwerte der Kanalimpulsantwort nicht die inverse z-Transformation aus der z-Transformierten des Übertragungskanals, sondern die inverse diskrete Fourier-Transformation aus den diskreten Fourierspektren der Übertragungsstrecke herangezogen wird.

Eine notwendige Voraussetzung für die Anwendung der inversen Fourier-Transformation anstelle der inversen Z-Transformation besteht in der begrenzten Anzahl an Stützwerten der zu transformierenden diskreten Zeitfunktion. Die Erfindung zieht als Eingangsgrößen für die Durchführung der diskreten Fourier-Transformation anstelle der üblichen diskreten Zeitfunktion die Koeffizienten des Entzerrers (Equalizers) heran. Führt man nämlich die diskrete Entzerrer-Übertragungsfunktion (z-Transformierte)

$$H_E(z) = \frac{\sum_{n=0}^{k\_FIR} b_n \cdot z^{-n}}{1 + \sum_{n=1}^{k\_IIR} a_n \cdot z^{-n}}$$

(2)

über die zulässige Substitution $z = e^{(\sigma + j\omega)T}$ (mit $\sigma=0$, $\omega=2\pi f$, T = Symboldauer) in die Formel

$$H_E(f) = \frac{\sum_{n=0}^{k\_FIR} b_n \cdot e^{-j \cdot 2\pi \cdot n \cdot f \cdot T}}{1 + \sum_{n=1}^{k\_IIR} a_n \cdot e^{-j \cdot 2\pi \cdot n \cdot f \cdot T}}$$

(3)

über und vergleicht diese mit der Formel zur Berechnung der diskreten Fourier-Spektren X(k) aus der korrespondierenden diskreten Zeitfunktion

$$X(k) = \frac{1}{N_F} \cdot \sum_{n=0}^{N_F-1} x(n) \cdot e^{-j \cdot 2\pi k \cdot n / N_F}$$

(4)

so erkennt man im Zähler- und Nennerterm der diskreten Übertragungsfunktion $H_E(f)$ des Entzerrers eine mathematische Analogie zum Ausdruck für die Berechnung der diskreten Fourier-Spektren X (k) aus der diskreten Zeitfunktion x(n), falls folgende Voraussetzungen erfüllt sind:

1. Der Laufindex n der algebraischen Summe im Nenner von $H_E$ (f) beginnt mit 0 anstelle der bisherigen 1 und der Koeffizient $a_0$ ist 1, so daß die ursprünglich führende 1 im Nennerterm von $H_E$ (f) in die Summenfunktion integriert ist
2. Die Folgen der Koeffizienten $a_n$ und $b_n$ der diskreten Entzerrer-Übertragungsfunktion $H_E$(f) sind begrenzt (n (Nennerterm) <= k_IIR, n(Zählerterm) <= k_FIR).
3. Die Anzahl $N_F$ der Stützwerte der diskreten Fourier-Transformation X(k) ist größer als der Maximalwert aus Summandenanzahl des Zählerterms k_FIR oder Summandenanzahl des Nennerterms k_IIR.
4. Aus der Kombination von Voraussetzung 2 und 3 folgt, daß die restlichen Koeffizienten $a_n$ mit den Laufindizes zwischen $k_{\_IIR}$ und $N_F$ und $b_n$ mit den Laufindizes zwischen $k_{\_FIR}$ und $N_F$ 0 sind.

Der erfinderische Gedanke liegt nun in der Ausnutzung dieser mathematischen Analogie. Da die Folge der Koeffizienten $a_n$ und $b_n$ der Entzerrer-Übertragungsfunktion $H_E$ (f) begrenzt ist (Voraussetzung 2) und alle übrigen obigen Voraussetzungen erfüllbar sind, können für die Berechnung der diskreten Fourier-Spektren des Übertragungskanals $H_K$(f) die Koeffizientenfolgen $a_n$ und $b_n$ der Entzerrer-Übertragungsfunktionen $H_E$(f) anstelle einer geeigneten diskreten Zeitfunktion x(n) herangezogen werden. Hierfür werden die diskreten Fourier-Spektren getrennt für den Zähler und Nenner der Entzerrer-Übertragungsfunktion $H_E$ (f) aus den Nennerkoeffizienten an und den Zählerkoeffizienten $b_n$ berechnet. Die gesuchten diskreten Fourier-Spektren des Übertragungskanals $H_K$ (f) ergeben sind dann bei Berücksichtigung der inversen Übertragungscharakteristik zwischen Übertragungskanal und Entzerrer (Equalizer) aus der Division der somit gewonnenen Nenner-Fourierspektren durch die Zähler-Fourierspektren der Entzerrer-Übertragungsfunktion.
Der erfindungsgemäße Lösungsweg der diskreten Fourier-Transformation im Gegensatz zur alternativ anwendbaren z-Transformation macht nur die Berechnung einer begrenzten Anzahl von diskreten Fourier-Spektren erforderlich. Der bedeutendste vorteil des erfindungsgemäßen Verfahrens ist aber in der Anwendung der schnellen Fourier-Transformation für die diskrete Fourier-Transformation wie auch für die inverse diskrete Fourier-Transformation zu sehen. Die Recheneffizienz kann durch die Verwendung der schnellen Fourier-Transformation, deren Algorithmus mit minimierten Rechenoperationen arbeitet, deutlich gesteigert werden.

**EP 1 568 186 B1**

Die Ansprüche 2 bis 14 beinhalten vorteilhafte Weiterbildungen der Erfindung.

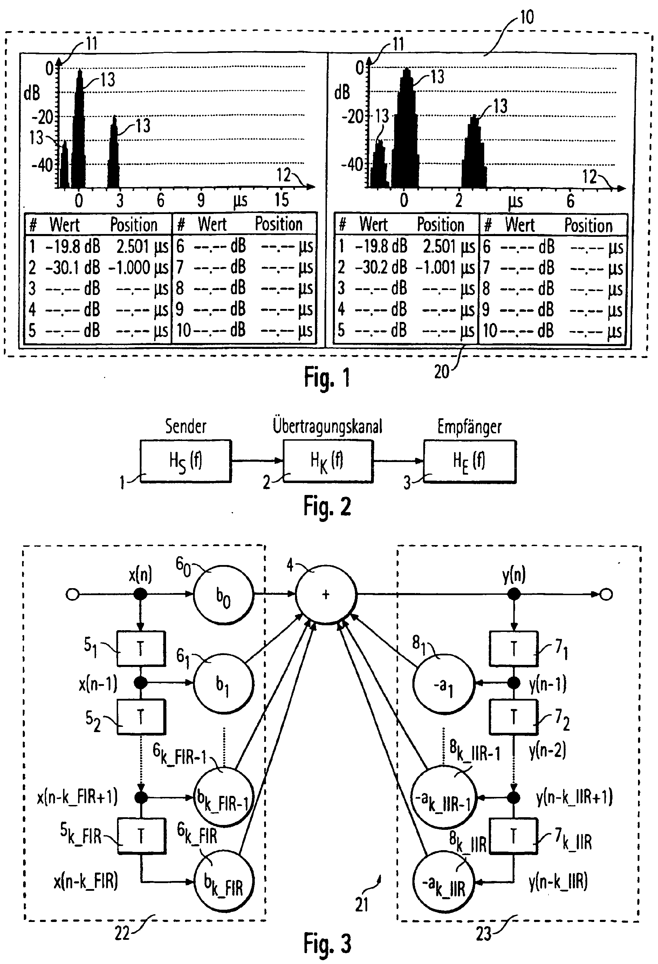

Im Hinblick auf eine anschauliche Darstellung der diskreten Kanalimpulsantwort müssen die ermittelten Abtastwerte der Kanalimpulsantwort noch einer zusätzlichen Signalweiterverarbeitung zugeführt werden. Die Signalweiterarbeitung beinhaltet eine Betragsbildung der komplexen Stützwerte der Kanalimpulsantwort. Eine zweckmäßige Darstellung der gefundenen Pegelwerte im halblogarithmischen Maßstab entsprechend der in Fig. 1 gewählten Darstellung erfordert im zweiten Verarbeitungsschritt eine Logarithmierung der Abtastwerte der Kanalimpulsantwort. Schließlich wird mit einer Normierung der einzelnen Abtastwerte auf der Basis des größten Abtastwertes ein Pegelvergleich der einzelnen Stützwerte der Kanalimpulsantwort unterstützt. Eine sortierte Darstellung der normierten Impulse stellt eine nützliche Informationsreduktion für das Servicepersonal dar.

Die einzelnen Impulse der Kanalimpulsantwort stellen Echosignale des an den einzelnen Störstellen im Übertragungskanal reflektierten Sendeimpulses dar. Eine Umrechnung der zeitlichen Lagen (in Mikrosekunden) der Impulse in entsprechende Längenangaben - durch Multiplikation der errechneten Zeit mit der Übertragungsgeschwindigkeit (bei Funkübertragung: Lichtgeschwindigkeit) - erleichtert deshalb die geographische Identifizierung der Hindernisse im Bezug zur Position der mobilen Meßeinrichtung deutlich.

Die Ansprüche 15 bis 18 betreffen ein digitales Speichermedium, ein Computerprogramm bzw. ein Computerprogramm-Produkt zur Durchführung des erfindungsgemäßen Verfahrens.

Ein Ausführungsbeispiel der Erfindung wird nachfolgend unter Bezugnahme auf die Zeichnung näher beschrieben. In der Zeichnung zeigen:

Fig. 1            ein Beispiel für eine graphische Darstellung der Kanalimpulsantwort;

Fig. 2            ein Signalflußplan einer Übertragungsstrecke;

Fig. 3            ein Signalflußplan eines Entzerrers (Equalizers) mit einem rekursiven und einem nicht-rekursiven Filteranteil;

Fig. 4a und Fig. 4b    ein Flußdiagramm zur Erläuterung des erfindungsgemäßen Verfahrens zur Bestimmung der Kanalimpulsantwort in einem zeitdiskreten System; und

Fig. 5            ein Flußdiagramm zur Erläuterung des erfindungsgemäßen Verfahrens zur Bestimmung der lokalen Maxima der Stützwerte einer Kanalimpulsantwort.

Anhand der Fig. 1 bis 5 wird nachfolgend das erfindungsgemäße Verfahren zur Bestimmung der Kanalimpulsantwort in einem zeitdiskreten System erläutert.

Bei der in den folgenden Abschnitten beschriebenen Erfindung wird von einer Übertragungsstrecke, wie sie in Fig. 2 dargestellt ist, ausgegangen. Der Sender 1 mit dem durch die Übertragungsfunktion $H_S(f)$ beschriebenen Systemverhalten gibt ein Signal ab, das als ideal angenommen wird. Dieses gesendete Signal wird über einen Übertragungskanal 2 (Funk, Kabel, Luft, Wasser usw.) übertragen. Das Übertragungsverhalten des Übertragungskanals 2 wird durch die Übertragungsfunktion $H_K(f)$ beschrieben. Am Ende des Übertragungskanals wird das übertragene Signal vom Empfänger 3, der die Übertragungsfunktion $H_E(f)$ aufweist, empfangen. Der Empfänger 3 beinhaltet unter anderem einen Entzerrer 21 (Equalizer), der das vom Übertragungskanal 2 linear verzerrte Übertragungssignal entzerrt.

Der Entzerrer (Equalizer) 21 ist durch die in Fig. 3 dargestellte Vorrichtung bestimmt. Diese Vorrichtung weist eine Direktstruktur auf und besteht aus der nicht-rekursiven (finite-impulse-response = FIR) Filterkomponente 22, der rekursiven (infinite-impulse-response = IIR) Filterkomponente 23 und dem Summationsglied 4. Das Eingangssignal der nicht-rekursiven Filterkomponente 22 ist das zum Abtastzeitindex n empfangene Signal $x(n)$, das einem ersten Verzögerungsglied $5_1$ zugeführt wird. Das Verzögerungsglied $5_1$ verzögert das Signal $x(n)$ um eine Abtastperiode T und erzeugt somit das Signal $x(n-1)$. Dieses Signal $x(n-1)$ wird durch weitere in Kette geschaltete Verzögerungsglieder, die identisches Verzögerungsverhalten wie das erste Verzögerungsglied $5_1$ besitzen, um jeweils eine Abtastperiode (bzw. Symboldauer) T verzögert. Die Anzahl der in Kette geschalteten Verzögerungsglieder der FIR-Filterkomponente entspricht der Ordnung k_FIR der FIR-Filterkomponente. Die Kette an Verzögerungsgliedern in der FIR-Filterkomponente 22 setzt sich folglich nach dem Verzögerungsglied $5_1$ mit dem Verzögerungsglied $5_2$ fort und endet mit dem Verzögerungsglied $5_{k\_FIR}$. Das Eingangssignal des letzten Verzögerungsgliedes ist folglich das Empfangssignal $x(n-k\_FIR+1)$ zum Abtastzeitpunkt mit dem Index n-k_FIR+1, während das zugehörige Ausgangssignal das Empfangssignal $x(n-k\_FIR)$ zum Abtastzeitpunkt mit dem Index n-k_FIR ist.

Das Empfangssignal $x(n)$ wird nach Multiplikation mit dem Koeffizienten $b_0$ im Multiplizierer $6_0$ dem Summationsglied 4 zugeführt. Ganz analog werden die in den einzelnen Verzögerungsgliedern $5_1$ bis $5_{k\_FIR}$ erzeugten verzögerten Empfangssignale $x(n-1)$ bis $x(n-k\_FIR)$ multiplikativ verknüpft und dem Summationsglied 4 zugeführt. Das vom Verzögerungsglied $5_1$ erzeugte verzögerte Empfangssignal $x(n-1)$ wird folglich nach der Multiplikation mit dem Koeffizienten

$b_1$ im Multiplizierer $6_1$ dem Summationsglied 4 zugeführt. Das vom Verzögerungsglied $5_{k\_FIR}$ erzeugte verzögerte Empfangssignal x(n-k_FIR) wird folglich nach der Multiplikation mit dem Koeffizienten $b_{k\_FIR}$ im Multiplizierer $6_{k\_FIR}$ der Summationsglied 4 zugeführt.

Das Eingangssignal der rekursiven Filterkomponente 23 ist gleichzeitig das Ausgangssignal des Entzerrers 21 (Equalizers) y(n) zum Abtastindex n und entspricht dem Ausgangssignal des Summationsgliedes 4. In der rekursiven Filterkomponente 23 der Vorrichtung 1 wird das Ausgangssignal y(n) des Entzerrers (Equalizers) zum Abtastindex n einem ersten Verzögerungsglied $7_1$ zugeführt. Diese Verzögerungsglied $7_1$, das die gleiche Verzögerungscharakteristik wie die Verzögerungsglieder $5_1$ bis $5_{k\_IIR}$ der nicht-rekursiven Filterkomponente 22 aufweist, erzeugt ein um eine Abtastperiode gegenüber dem Ausgangssignal y(n) verzögertes Ausgangssignal y(n-1). Dieses einfach verzögerte Ausgangssignal y(n-1) wird durch weitere in Kette verschaltete Verzögerungsglieder, die identisches Verzögerungsverhalten besitzen wie Verzögerungsglied $7_1$, um jeweils eine Abtastperiode verzögert. Die Anzahl der in Kette geschalteten Verzögerungsglieder der IIR-Filterkomponente entspricht der Ordnung k_IIR der IIR-Filterkomponente. Die Kette an Verzögerungsgliedern in der IIR-Filterkomponente setzt sich folglich nach dem Verzögerungsglied $7_1$ mit dem Verzögerungsglied $7_2$ fort und endet mit dem Verzögerungsglied $7_{k\_IIR}$. Das Eingangssignal des letzten Verzögerungsgliedes ist folglich das Empfangssignal x(n-k_IIR+1) zum Abtastindex n-k_IIR+1, während das zugehörige Ausgangssignal das Empfangssignal x(n-k_IIR) zum Abtastindex n-k_IIR ist.

Das im Verzögerungsglied $7_1$ erzeugte einfach verzögerte Ausgangssignal y(n-1) wird nach der Multiplikation mit dem Koeffizienten $-a_1$ im Multiplizierer $8_1$ dem Summationsglied 4 zugeführt. Ganz analog werden die von den restlichen Verzögerungsliedern $7_2$ bis $7_{k\_IIR}$ erzeugten verzögerten Ausgangssignale y(n-2) bis y(n-k_IIR) multiplikativ verknüpft und dem Summationsglied 4 zugeführt. Das vom Verzögerungsglied $7_{K\_IIR-1}$ des rekursiven Filteranteils 23 erzeugte k_IIR-1-fach verzögerte Ausgangssignal y(n-k_IIR+1) wird folglich nach Multiplikation mit dem Koeffizienten $-a_{k\_IIR-1}$ im Multiplizierer $8_{k\_IIR-1}$ dem Summationsglied 4 zugeführt. Das vom Verzögerungsglied $7_{K\_IIR}$ des rekursiven Filteranteils 23 erzeugte k_IIR-fach verzögerte Ausgangssignal y(n-k_IIR) wird folglich nach Multiplikation mit dem Koeffizienten $-a_{k\_IIR}$ im Multiplizierer $8_{k\_IIR}$ dem Summationsglied 4 zugeführt.

Die FIR-Komponente 22 weist ein Übertragungsverhalten mit einer endlich langen Impulsantwort auf. Die FIR-Komponente 22 wird hauptsächlich zur Kompensation von Vorechos verwendet. Die IIR-Komponente 23 weist dagegen ein Übertragungsverhalten mit einer unendlich langen Impulsantwort auf und eignet sich deshalb vor allem zur Kompensation von Nachechos. Die Koeffizienten $b_0$ bis $b_{k\_FIR}$ sowie $-a_1$ bis $-a_{k\_IIR}$ der Multiplizierer $6_0$ bis $6_{k\_FIR}$ sowie $8_1$ bis $8_{k\_IIR}$ werden über adaptive Optimierungsverfahren derart eingestellt, daß das Übertragungsverhalten des Entzerrers (Equalizers) im Idealfall exakt invers zur Übertragungsverhalten des Übertragungskanals 2 ist. Im Übertragungskanal 2 aufgrund von Störquellen auftretende lineare Verzerrungen des zu übertragenden Signals können auf diese Weise mit Hilfe des Entzerrers (Equalizers) entzerrt werden. In zeitdiskreten Systemen werden durch die lineare Verzerrung im Übertragungskanal 2 aus den die Nutzdaten übertragenden Impulsen zusätzliche störende Vor- und Nachechos erzeugt, die durch die rekursiven und nicht-rekursiven Filterstrukturen des Equalizers beseitigt werden.

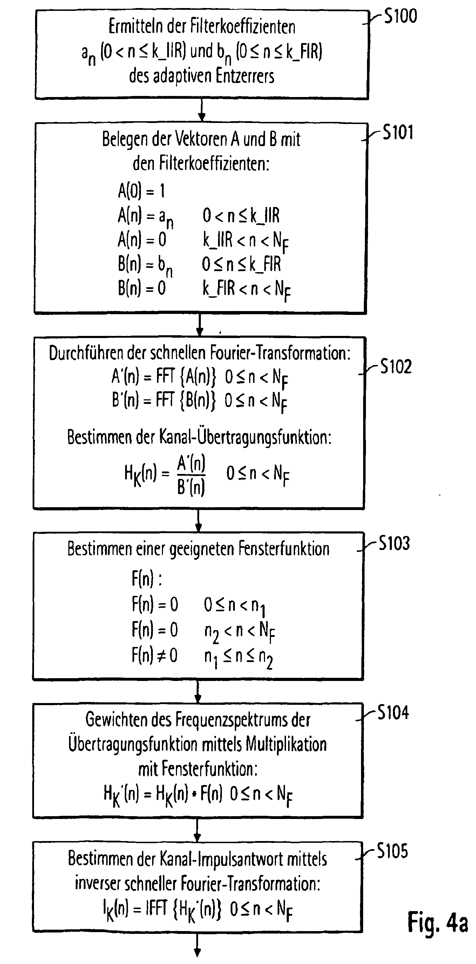

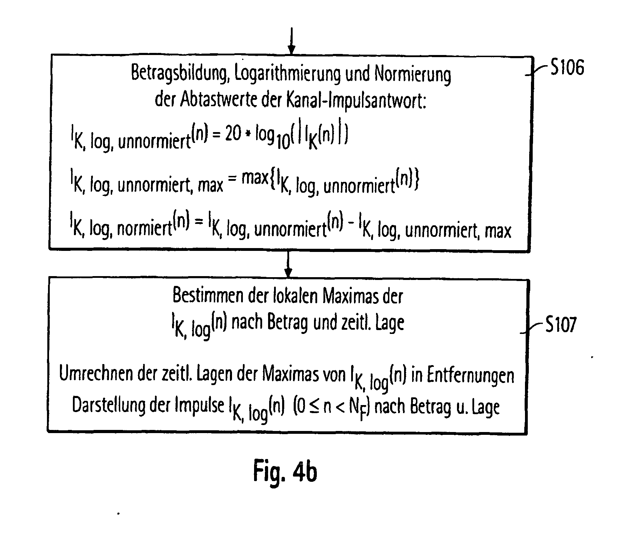

Die zusammengehörigen Fig. 4a und 4b zeigen einen Überblick über das erfindungsgemäße Verfahren.

Die Ermittelung der Filterkoeffizienten des Entzerrers (Equalizers) $a_1$ bis $a_{k\_IIR}$ sowie $b_0$ bis $b_{k\_FIR}$ stellt einen der eigentlichen Erfindung vorgelagerten ersten Verfahrensschritt S100 im Verfahrensablauf zur Bestimmung der Kanalimpulsantwort gemäß Fig. 4 dar. Die Ermittlung der Filterkoeffizienten wird, wie obig schon erwähnt, durch einen adaptiven Optimierungsalgorithmus z.B. entsprechend K.D. Kammeyer, a.a.O., durchgeführt.

Im nächsten Verfahrensschritt S101 werden als Vorbereitung zur Berechnung der diskreten Fourier-Spektren des Übertragungskanals mittels diskreter Fourier-Transformation der Eingangsvektor A(n) für die Berechnung der zählerseitigen, diskreten Fourier-Spektren A'(n) und der Eingangsvektor B(n) für die Berechnung der nennerseitigen, diskreten Fourier-Spektren B'(n) vorbelegt. Hierzu werden im ersten Teilschritt des Verfahrensschritts S101 die beiden Eingangsvektoren A(n) und B(n) bereitgestellt, die beide die Länge $N_F$ aufweisen. $N_F$ ist die Anzahl der Abtastwerte im Zeit- wie auch Frequenz-Bereich der Fourier-Transformation und sollte sinnvollerweise größer als der Maximalwert aus Koeffizientenanzahl der FIR-Komponente k_FIR und IIR-Komponente k_IIR des Entzerrers (Equalizers) sein. Im nächsten Teilschritt des Verfahrensschrittes S101 werden die Elemente der Eingangsvektoren A(n) und B(n) vorzugsweise folgendermaßen belegt:

$$A(0) = 1$$

$$A(n) = a_n \quad \text{für } 0 < n <= k\_IIR$$
$$A(n) = 0 \quad \text{für } k\_IIR < n < N_F$$
$$B(n) = b_n \quad \text{für } 0 <= n <= k\_FIR$$
$$B(n) = 0 \quad \text{für } k\_FIR < n < N_F$$

Die Belegung der Eingangsvektoren A(n) und B(n) basiert auf den in der Einleitung bereits dargelegten notwendigen Voraussetzungen zur Anwendung der diskreten Fourier-Transformation auf die Filterkoeffizienten $a_n$ und $b_n$ des Entzerrers (Equalizers) anstelle einer diskreten Zeitfunktion.

Im nächsten Verfahrensschritt S102 wird aus dem Eingangsvektor A(n) entsprechend der Formel (5) mittels diskreter Fourier-Transformation der Ausgangsvektor A'(n) berechnet, der den zählerseitigen diskreten Fourier-Spektren der Übertragungsfunktion des Übertragungskanals $H_K(f)$ entspricht:

$$A'(n) = \frac{1}{N_F} \cdot \sum_{k=0}^{N_F-1} A(k) \cdot e^{-j \cdot 2\pi k \cdot n / N_F} \qquad \text{für } 0 <= n < N_F \qquad (5)$$

Ganz analog wird aus dem Eingangsvektor B(n) entsprechend der Formel (6) mittels diskreter Fourier-Transformation der Ausgangsvektor B'(n) berechnet, der den nennerseitigen diskreten Fourier-Spektren der Übertragungsfunktion des Übertragungskanals $H_K(f)$ entspricht:

$$B'(n) = \frac{1}{N_F} \cdot \sum_{k=0}^{N_F-1} B(k) \cdot e^{-j \cdot 2\pi k \cdot n / N_F} \qquad \text{für } 0 <= n < N_F \qquad (6)$$

Um die Anzahl an Multiplikationen und Additionen für die Berechnung von A'(n) bzw. B'(n) entsprechend der Formeln (5) und (6) zu reduzieren, bietet sich die Anwendung der schnellen diskreten Fourier-Transformation (FFT, Fast Fourier Transform) an, die ohne Genauigkeitsverlust im Ergebnis den Rechenaufwand gegenüber der normalen diskreten Fourier-Transformation deutlich reduziert.

Die diskreten Fourier-Spektren des Übertragungskanals $H_K(f)$ werden durch Division der Elemente des zählerseitigen Ausgangsvektors A'(n) durch die Elemente des nennerseitigen Ausgangsvektors B'(n) entsprechend der Formel (7) ermittelt.

$$H_k(n) = A'(n) / B'(n) \quad \text{für } 0 <= n < N_F \quad (7)$$

Aufgrund der Periodisierungseigenschaft der diskreten Fouriertransformation treten bei zeitlicher Begrenzung der Abtastwerte im Zeitbereich mittels Fensterfunktion unerwünschte Abweichungen des Spektrums vom gewünschten Idealverlauf auf. Diese sind in der Fachliteratur als Leckeffekt - spektrale Verbreiterung des Spektrums - und Lattenzauneffekt - Verfälschung des Betrags der Abtastwerte des Spektrums - bekannt. Zur Minimierung dieser Leck- und Lattenzauneffekte werden die diskreten Fourier-Spektren des Übertragungskanals $H_K(n)$ vorzugsweise mit einer optimierten Fensterfunktion F(n) gewichtet, deren Form an das verwendete Modulationssignal angepaßt ist. Die Bestimmung der Fensterfunktion F(n) ist Inhalt des Verfahrensschritts S103. Um die Gewichtung bzw. Multiplikation des diskreten Fourier-Spektrums des Übertragungskanals $H_K(n)$ mit der Fensterfunktion F(n) durchführen zu können, muß die Länge des Fensterfunktions-Vektors F(n) der Länge $N_F$ des diskreten Fourier-Vektors des Übertragungskanalsspektrums $H_K(n)$ entsprechen. Die Elemente der Fensterfunktions-Vektors F(n) werden folgendermaßen belegt:

$$F(n) = 0 \quad \text{für } 0 \le n < n_1$$
$$F(n) = 0 \quad \text{für } n_2 < n < N_F$$
$$F(n) \neq 0 \quad \text{für } n_1 \le n \le n_2$$

Die Festlegung der unteren und oberen Grenzfrequenz $n_1$ und $n_2$ der Fensterfunktion F(n) erfolgt abhängig von der Modulationsart des zu übertragenden Signals, da die Modulationsart die Position und die Breite des diskreten Fourier-Spektrums des aus Träger und Nutzsignal bestehenden, noch nicht im Empfänger 3 demodulierten Übertragungssignals im Frequenzraum bestimmt. Für ein Einseitenbandsignal (z.B. 8VSB: Vestigial Side Band) empfiehlt sich $n_1 = 0$ und $n_2 = N_F / 2 - 1$ zu setzen, während für ein Zweiseitenbandsignal (z.B. QAM: Quadratur Amplitude Modulation) vorzugsweise $n_1 = 0$ und $n_2 = N_F - 1$ zu setzen ist.

Für die Wahl der Fensterfunktion F(n), innerhalb der unteren und oberen Grenzfrequenz $n_1$ und $n_2$ können verschiedene mathematische Funktionen herangezogen werden. Im Rahmen des erfindungsgemäßen Verfahrens zur Bestimmung der Kanalimpulsantwort in einem zeitdiskreten System wird vorzugsweise eine Fensterfunktion F(n) entsprechend der Formel (8) verwendet.

$$F(n) = a - b \cdot \cos\left(2\pi \cdot \frac{n - n_1}{n_2 - n_1}\right) + c \cdot \cos\left(4\pi \cdot \frac{n - n_1}{n_2 - n_1}\right) \qquad (8)$$

Mit den Parametern a, b, und c kann die Form der Fensterfunktion F(n) anwendungs- bzw. betriebsspezifisch noch angepaßt werden.

Im darauffolgenden Verfahrensschritt S104 werden die in Verfahrensschritt S102 ermittelten diskreten Fourier-Spektren des Übertragungskanals $H_K(n)$ zur Minimierung der Leck- und Lattenzauneffekte mit der Fensterfunktion mittels Multiplikation entsprechend der Formel (9) gewichtet.

$$H'_K(n) = H_K(n) \cdot F(n) \qquad \text{für } 0 <= n < N_F \quad (9)$$

Mit der frequenzbegrenzten, diskreten Kanalübertragungsfunktion $H'_K(n)$ liegt nun eine geeignete Spektralfunktion vor, aus der im Verfahrensschritt S105 die diskrete Kanalimpulsantwort $I_K(n)$ mittels inverser diskreter Fourier-Transformation bestimmt werden kann. Die Berechnung der diskreten Kanalimpulsantwort $I_K(n)$ erfolgt entsprechend der Formel (10).

$$I_K(n) = \sum_{k=0}^{N_F - 1} H_K'(k) \cdot e^{j \cdot 2\pi k \cdot n / N_F} \qquad \text{für } 0 <= n < N_F \quad (10)$$

Ganz analog zur diskreten Fourier-Transformation in Formel (5) und (6) kann im Hinblick auf eine sinnvolle Steigerung der Recheneffizienz auch für die inverse diskrete Fourier-Transformation entsprechend der Formel (10) die schnelle inverse Fourier-Transformation (IFFT, Inverse East Fourier Transform) zum Einsatz kommen.

Um die diskrete Kanalimpulsantwort $I_K(n)$ für den Anwender bei der Durchführung der Servicemessungen in einer brauchbaren graphischen Form darstellen zu können, sind weiterer Signalverarbeitungsschritte durchzuführen. Im Verfahrensschritt S106 werden die komplexen Stützwerte der Kanalimpulsantwort $I_K(n)$ dafür in einem ersten Teilschritt einer Betragsbildung unterzogen. Außerdem werden die Stützwerte der Kanalimpulsantwort $I_K(n)$, deren Pegel über mehrere Dekaden streuen können, hinsichtlich einer sinnvollen Darstellung im halblogarithmischen Maßstab noch logarithmiert. Die Betragsbildung und Logarithmierung der diskreten Kanalimpulsantwort $I_K(n)$ wird entsprechend der Formel (11) durchgeführt.

$$I_{K, \log, unnormiert}(n) = 20 * \log_{10}(|I_K(n)|) \qquad (11)$$
$$\text{für } 0 <= n < N_F$$

Für einen Pegelvergleich der einzelnen Stützwerte der Kanalimpulsantwort $I_K(n)$ in einer graphischen Darstellung bietet sich eine Normierung aller Stützwerte mit einer Bezugsgröße an. Da der maximale Stützwert der Kanalimpulsantwort $I_K(n)$ eine geeignete Bezugsgröße darstellt, wird deshalb im nächsten Teilschritt des Verfahrensschrittes S106 aus allen $N_F$ Stützwerten der Kanalimpulsantwort $I_{K, \log,unnormiert}(n)$ gemäß Formel (12) der Maximalwert $I_{K, \log, unnormiert, max}$ gesucht.

$$I_{K,log,unnormiert,max} = \max\{I_{K,log,unnormiert}(n)\} \qquad (12)$$

$$\text{für } 0 <= n < N_F$$

Die Normierung der unnormierten Stützwerte der Kanalimpulsantwort $I_{K,log,unnormiert}(n)$ mit dem maximalen Stützwert $I_{K,log,unnormiert,max}$ ist aus Formel (13) zu ersehen.

$$I_{K,log}(n) = I_{K,log,unnormiert}(n) - I_{K,log,unnormiert,max}$$
$$\text{für } 0 <= n < N_F \qquad\qquad (13)$$

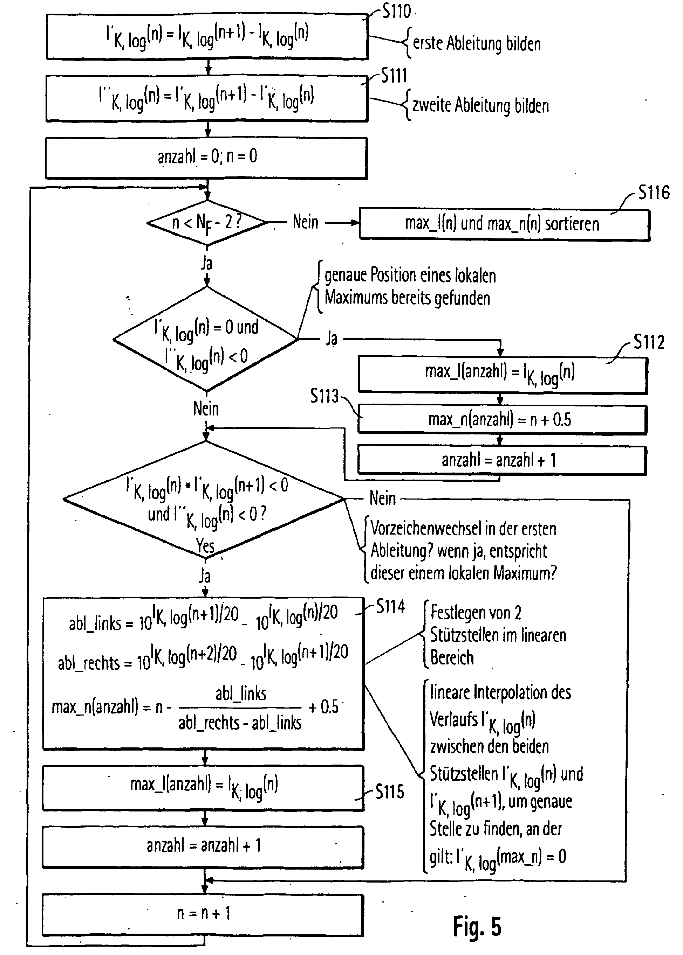

Da bei Servicemessungen in der Praxis oftmals eine Vielzahl an Echoimpulsen in der Kanalimpulsantwort enthalten sein können, die für das Servicepersonal nicht mehr handhabbar ist, ist eine Informationsreduzierung sinnvoll, bei der zum Beispiel eine sortierte Darstellung nach den zehn größten Echosignalen gewählt wird. Der nächste Verfahrensschritt S107 beinhaltet deshalb die Suche nach lokalen Maxima der normierten Stützwerte der Kanalimpulsantwort $I_K(n)$. Das erfindungsgemäße Verfahren zur Suche der lokalen Maxima der Kanalimpulsantwort $I_K(n)$ und zur Sortierung der gefundenen Maxima nach der Größe ihres Betrages ist in Fig. 5 dargestellt und wird in einem späteren Abschnitt der Beschreibung im Detail erläutert.

Zur Detektion der geographischen Position der Hindernisse im Übertragungskanal 2 ist es für das Servicepersonal sinnvoll, anstelle des Empfangszeitpunktes der durch die Hindernisse erzeugten Echosignale die dazu korrespondierende Entfernung des Hindernisses von der aktuellen Position des mobilen Meßempfängers zu ermitteln. Die Umrechnung der zeitlichen Lage der größten, im vorherigen Teilschritt ermittelten Echosignale der Kanalimpulsantwort $I_K(n)$ in die entsprechenden Entfernungen über die Multiplikation der zeitlichen Lage mit der Übertragungsgeschwindigkeit erfolgt im nächsten Teilschritt.

Im letzten Teilschritt des Verfahrensschritts S107 erfolgt schließlich die graphische Darstellung der diskreten Kanalimpulsantwort $I_K(n)$ entsprechend der Fig. 1.

Die graphische Darstellung in Fig. 1 enthält im graphischen Bereich 10 die graphische Darstellung der Kanalimpulsantwort $I_K(n)$ und im tabellarischen Bereich 20 die tabellarische Auflistung der beispielsweise zehn betragsmäßig größten Stützpunkte der Kanalimpulsantwort $I_K(n)$. Der graphische Bereich 10 enthält ein halblogarithmisches Diagramm mit der Ordinatenachse 11, die eine logarithmische Skala mit der Einheit dB aufweist und Bezugsachse des Pegelwertes der Stützpunkte der Kanalimpulsantwort $I_K(n)$ ist, und der Abszissenachse 12, die eine lineare Skala mit der Einheit μs aufweist und Bezugsachse der zeitlichen Lage der Stützpunkte der Kanalimpulsantwort $I_K(n)$ ist. In diesem halblogarithmischen Diagramm werden die einzelnen Stützpunkte der Kanalimpulsantwort $I_K(n)$ als Pegelsäulen 13, deren Höhen mit den Pegelwerten den Stützpunkten korrespondieren, an der Stelle der Abszissenachse 12 positioniert, die ihrer zeitlichen Lage entspricht. Im tabellarischen Bereich werden in einer dreispaltigen Tabelle die beispielsweise zehn betragsmäßig größten Stützpunkte der Kanalimpulsantwort $I_K(n)$in bzgl. ihres Betragswertes in absteigender Reihenfolge sortiert aufgelistet, wobei die erste Spalte die Rangfolge, die zweite Spalte den Betrag des Pegelwertes und die dritte Spalte die zeitliche Lage des Stützpunktes der Kanalimpulsantwort $I_K(n)$ enthält.

Das obig im Verfahrensschritt S107 erwähnte Unterverfahren zur Suche eines lokalen Maximus der Stützpunkte der Kanalimpulsantwort $I_K(n)$, das in Fig. 5 dargestellt ist, beginnt im Verfahrensschritt S110 mit der Berechnung der ersten Ableitung $I_K'(n)$ der diskrete Stützpunktsfolge $I_K(n)$ der Kanalimpulsantwort gemäß der Formel (14).

$$I_{K,log}{}'(n) = I_{K,log}(n+1) - I_{K,log}(n) \qquad (14)$$
$$\text{für } 0 <= n < N_F-1$$

Im nächsten Schritt S111 wird die zweite Ableitung $I_K''(n)$ der diskreten Stützpunktsfolge $I_K(n)$ der Kanalimpulsantwort gemäß der Formel berechnet.

$$I_{K,log}{}''(n) = I_{K,log}{}'(n+1) - I_{K,log}{}'(n) \tag{15}$$
$$\text{für } 0 <= n < N_F-2$$

Nachdem die Laufvariablen "anzahl" für die gefundenen lokalen Maxima der Stützpunkte der Kanalimpulsantwort $I_K(n)$ und n für die Stützpunkte der Kanalimpulsantwort $I_K(n)$ durch Nullen initialisiert werden, erfolgt mit der Abfrage, ob die Laufvariable n kleiner als $N_F$ - 2 ist, eine Abfrage, ob noch nicht alle Stützpunkte bzgl. der Suche nach einem lokalen Maximum untersucht wurden. Im Nein-Fall der Abfrage werden im Verfahrensschritt S116 die im Suchverfahren gefundenen lokalen Maxima der Stützpunkte $I_K(n)$ der Kanalimpulsantwort mit dem Betrag max_I (n) und der zeitlichen Lage max_n (n) entsprechend der Größe des Betrages max_I (n) sortiert.

Im Ja-Fall der Abfrage wird mit der weiteren Abfrage, ob die erste Ableitung $I'_{K,log}$ (n) der Stützpunktfolge zwischen den Abtastzeiten n und n+1 gleich Null ist und gleichzeitig die zweite Ableitung $I''_{K,log}$ (n) der Stützpunktfolge zum Abtastzeitpunkt n+1 kleiner Null ist, ermittelt, ob ein lokales Maximum zwischen den beiden Abtastzeitpunkten n und n+1 vorliegt. Im Ja-Fall der Abfrage wird im darauf folgenden Verfahrensschritt S112 das nächste Element des Vektors max_I(anzahl) für die Beträge der gefundenen lokalen Maxima mit Betrag des gerade untersuchten Stützpunktes $I_K(n)$ gemäß Formel (16) besetzt.

$$\text{max\_I(anzahl)} = I_{K,log}(n) \tag{16}$$

Im nächsten Schritt S113 wird das nächste Element des Vektors max_n(anzahl) für die zeitlichen Lagen der gefundenen lokalen Maxima entsprechend der Formel (17) besetzt.

$$\text{max\_n(anzahl)} = n + 0,5 \tag{17}$$

Damit wird gekennzeichnet, dass das anzahl-te Maximum genau zwischen n und n+1 vorliegt. Mit der Inkrementierung der Laufvariable "anzahl" für die gefundenen lokalen Maxima endet die Bearbeitung des JA-Falls der letzt genannten Abfrage.

Das Ende dieser Bearbeitungsfolge wie auch der NEIN-Fall der letzt genannten Abfrage mündet in einer weiteren Abfrage, mit der ein mögliches lokales Maximum zwischen zwei Stützpunkten zum Abtastzeitpunkt n und n+1 ermittelt wird, das nicht genau in der Mitte zwischen den beiden Punkten n und n+1 liegt, falls das Produkt aus der ersten Ableitung $I'_{K,log}(n)$ der Stützpunktfolge zum Abtastzeitpunkt n und der ersten Ableitung $I'_{K,log}(n+1)$ der Stützpunktfolge zum Abtastzeitpunkt n+1 kleiner Null ist und gleichzeitig die zweite Ableitung $I''_{K,log}(n)$ der Stützpunktfolge zum Abtastzeitpunkt n kleiner Null ist.

Im Ja-Fall der Abfrage wird im Verfahrensschritt S114 über die Formeln (18), (19) und (20) das nächste Element des Vektors max_n (anzahl) der zeitlichen Lage des gefundenen lokalen Maximums ermittelt.

$$\text{abl\_links} = 10^{I_{K,log}(n+1)/20} - 10^{I_{K,log}(n)/20} \tag{18}$$

$$\text{abl\_rechts} = 10^{I_{K,log}(n+2)/20} - 10^{I_{K,log}(n+1)/20} \tag{19}$$

$$\max\_n(anzahl) = n - \frac{abl\_links}{abl\_rechts - abl\_links} + 0,5 \qquad (20)$$

Im Verfahrensschritt S115 wird das nächste Element des Vektors max_I(anzahl) mit dem Betrag des gefundenen lokalen Maximums entsprechend Formel (21) belegt.

$$\texttt{max\_I(anzahl)} = \texttt{I}_{K,\log}\texttt{(n)} \qquad (21)$$

Mit der Inkrementierung der Laufvariable "anzahl" für die gefundenen lokalen Maxima endet die Bearbeitung des JA-Falls der letzt genannten Abfrage.

Für den JA- und den NEIN-Fall der letzt genannten Abfrage wird schließlich als abschließende Berechnung des erfindungsgemäßen Algorithmus die Laufvariable n für die Stützpunkte der Kanalimpulsantwort $I_K(n)$ zur Untersuchung des nächsten Stützpunktes inkrementiert und an den Eingang der ersten Abfrage zurückverzweigt.

Mit den in Verfahrensschritt S114 vorgenommenen Berechnungen des in Fig. 5 dargestellten Verfahrens kann die zeitliche Auflösung der lokalen Maxima der Stützpunkte der Kanalimpulsantwort $I_K(n)$ deutlich erhöht werden, falls das lokale Maximum nicht exakt in der Mitte zwischen zwei Abtastpunkten n und n+1 liegt. Das Verfahren ist eine mögliche Lösung zur Erhöhung der zeitlichen Auflösung. Die Abtastwerte der ersten Ableitung $I_K'(n)$ werden durch einen linearen Polygonzug approximiert, dessen Nulldurchgang den exakten Ort des lokalen Maximums darstellt. Eine höhere zeitliche Auflösung in der Interpolation kann durch die Verwendung von Funktionen höherer Ordnung (z.B. Splinefunktionen oder Parabelstücke) erzielt werden.

### Patentansprüche

1. Verfahren zur Identifizierung von Hindernissen in einem Übertragungskanal mittels Laufzeitmessung durch Analyse der Kanalimpulsantwort ($I_k(n)$) des Übertragungskanals (2) unter Verwendung eines zeitdiskreten adaptiven Entzerrers (21), der dem Übertragungskanal (2) nachgeschaltet ist und diesen entzerrt, mit folgenden Verfahrensschritten:

   - Ermitteln (S110) der IIR-Filterkoeffizienten ($a_n$) eines rekursiven Filteranteils (23) und der FIR-Filterkoeffizienten ($b_n$) eines nicht-rekursiven Filteranteils (22) des zeitdiskreten adaptiven Entzerrers (21),
   - Belegen (S101) eines ersten mit Nullen vorbelegten Eingangsvektors (A (n)) mit den indexkorrespondierenden IIR-Filterkoeffizienten ($a_n$) und eines zweiten mit Nullen vorbelegten Eingangsvektors (B(n)) mit den indexkorrespondierenden FIR-Filterkoeffizienten ($b_n$), wobei das erste Vektorelement (A (0)) des ersten Eingangsvektors (A(n)) mit dem Wert 1 besetzt wird,
   - Ermitteln (S102) eines ersten Ausgangsvektors (A'(n)) aus dem ersten Eingangsvektor (A(n)) und eines zweiten Ausgangsvektors (B'(n)) aus dem zweiten Eingangsvektor (B(n)) jeweils unter Anwendung der diskreten Fourier-Transformation,
   - Bilden (S102) der diskreten Kanalübertragungsfunktion ($H_K(n)$) durch Division des ersten Ausgangsvektors (A'(n)) durch den zweiten Ausgangsvektor (B'(n)) und
   - Ermitteln (S105) der diskreten Kanalimpulsantwort ($I_k(n)$) aus der diskreten Kanalübertragungsfunktion ($H_k(n)$) unter Anwendung der inversen diskreten Fourier-Transformation,
   - Bestimmen (S107) von lokalen Maxima der Kanalimpulsantwort ($I_k(n)$) nach zeitlicher Lage und
   - Umrechnen der zeitlichen Lagen der lokalen Maxima in korrespondierende Entfernungen der Hindernisse zur Position eines den Entzerrer (21) enthaltenden Meßempfängers durch Multiplikation mit der Übertragungsgeschwindigkeit.

2. Verfahren nach Anspruch 1,
   **dadurch gekennzeichnet,**
   **daß** der erste Ausgangsvektor A'(n) durch diskrete Fourier-Transformation des mit den IIR-Filterkoeffizienten belegten ersten Eingangsvektors A(n) durch die Formel

$$A'(n) = \frac{1}{N_F} \cdot \sum_{k=0}^{N_F-1} A(k) \cdot e^{-j \cdot 2\pi k \cdot n / N_F}$$

für $0 <= n < N_F$

der zweite Ausgangsvektor B'(n) durch diskrete Fourier-Transformation des mit den FIR-Filterkoeffizienten belegten zweiten Eingangsvektors B (n) durch die Formel

$$B'(n) = \frac{1}{N_F} \cdot \sum_{k=0}^{N_F-1} B(k) \cdot e^{-j \cdot 2\pi k \cdot n / N_F}$$

für $0 <= n < N_F$

und die Kanalübertragungsfunktion $H_k(n)$ entsprechend der Formel

$$H_k(n) = A'(n) / B'(n) \qquad \text{für } 0 <= n < N_F$$

gebildet wird,
wobei

$N_F$ die Anzahl der Abtastwerte für die diskrete Fourier-Transformation,
n der Index, der die Stützwerte der Ausgangsvektoren bestimmt, und
k der Index, der die Stützwerte der Eingangsvektoren bestimmt,

bedeuten.

3. Verfahren nach Anspruch 1 oder 2,
   **dadurch gekennzeichnet,**
   **daß** die komplexe Kanalimpulsantwort $I_k(n)$ entsprechend der Formel

$$J_K(n) = \sum_{k=0}^{N_F-1} H_K(k) \cdot e^{j \cdot 2\pi k \cdot n / N_F}$$

gebildet wird,
wobei

$H_K(n)$ die Kanalübertragungsfunktion,
$N_F$ die Anzahl der Abtastwerte für die diskrete Fourier-Transformation,
k die diskreten Frequenzwerte, und
n der Index, der die Abtastwerte der Kanalimpulsantwort bestimmt,

bedeuten.

4. Verfahren nach einem der Ansprüche 1 bis 3,
   **dadurch gekennzeichnet,**
   **daß** sich nach dem Ermitteln (S105) der Kanalimpulsantwort ($I_K(n)$) die Verfahrenschritte Betragsbilden, Logarithmieren und Normieren (S106) der Kanalimpulsantwort $I_k(n)$ anschließen.

5. Verfahren nach Anspruch 4,
   **dadurch gekennzeichnet,**
   **daß** die Betragsbildung und Logarithmierung der komplexen Kanalimpulsantwort $I_k(n)$ entsprechend der Formel

$$I_{K,log,unnormiert}(n) = 20 * log_{10}(|I_K(n)|)$$

gebildet wird.

6. Verfahren nach Anspruch 5,
**dadurch gekennzeichnet,**
**daß** die Normierung der diskreten Kanal-Impulswerte $I_k(n)$ durch Suchen des betragsmäßig größten Abtastwertes $I_{k,log,\ unnormiert,max}(n)$ entsprechend folgender Funktion

$$I_{K,log,unnormiert,max}(n) = max\{I_{K,log,unnormiert}(n)\}$$

und anschließender Berechnung entsprechend der Formel

$$I_{K,log}(n) = I_{K,log,unnormiert}(n) - I_{K,log,unnormiert,max}(n)$$

gebildet wird.

7. Verfahren nach einem der Ansprüche 1 bis 6,
**dadurch gekennzeichnet,**
**daß** vor dem Ermitteln (S105) der Kanalimpulsantwort $I_K(n)$ ein Gewichten (S104) der Kanalübertragungsfunktion $H_K(n)$ mit einer Fensterfunktion $F(n)$ zur Gewinnung einer frequenzbandbegrenzten Kanalübertragungsfunktion $H_K'(n)$ entsprechend der Formel

$$H_k'(n) = H_k(n) \cdot F(n)$$

erfolgt.

8. Verfahren nach Anspruch 7,
**dadurch gekennzeichnet,**
**daß** als Fensterfunktion $F(n)$ die Funktion

$$F(n) = 0 \quad \text{für } 0 <= n < n_1$$
$$F(n) = 0 \quad \text{für } n_2 < n < N_F$$
$$F(n) \neq 0 \quad \text{für } n_1 <= n <= n_2$$

gewählt wird, wobei

$n$ der diskrete Frequenzindex,
$N_F$ die Anzahl der Abtastwerte für die diskrete Fourier-Transformation,
$n_1$ die untere, von der Modulationsart des zu übertragenden. Signals abhängige Grenzfrequenz der Fensterfunktion, und
$n_2$ die obere, von der Modulationsart des zu übertragenden Signals abhängige Grenzfrequenz der Fensterfunktion

bedeuten.

9. Verfahren nach Anspruch 8,
**dadurch gekennzeichnet,**
**daß** die Fensterfunktion $F(n)$ entsprechend der Formel

$$F(n) = a - b \cdot \cos\left(2\pi \cdot \frac{n - n_1}{n_2 - n_1}\right) + c \cdot \cos\left(4\pi \cdot \frac{n - n_1}{n_2 - n_1}\right)$$

$$\text{für } n_1 \; <= \; n \; <= \; n_2$$

gebildet wird,
wobei

$n$ der diskrete Frequenzwert,

$a$, $b$, $c$ frei wählbare Parameter zur Festlegung der Form der Fensterfunktion,

$n_1$ die untere, von der Modulationsart des zu übertragenden Signals abhängige Grenzfrequenz der Fensterfunktion, und

$n_2$ die obere, von der Modulationsart des zu übertragenden Signals abhängige Grenzfrequenz der Fensterfunktion

bedeuten.

10. Verfahren nach einem der Ansprüche 4 bis 6,
**dadurch gekennzeichnet,**
**daß** sich nach dem Betragsbilden, Logarithmieren und Normieren (S106) der Kanalimpulsantwort ($I_K(n)$) ein Bestimmen (S107) der lokalen Maxima der normierten Abtastwerte der Kanalimpulsantwort ($I_k(n)$) nach Betrag anschließt.

11. Verfahren nach Anspruch 10,
**dadurch gekennzeichnet,**
**daß** das Bestimmen (S107) der lokalen Maxima der normierten Abtastwerte der Kanalimpulsantwort ($I_K(n)$) folgende Verfahrensschritte beinhaltet:

- Bilden (S110) der ersten Ableitung ($I_{K,log}'(n)$) der diskreten Werte der Kanalimpulsantwort ($I_K(n)$),
- Bilden (S111) der zweiten Ableitung ($I_{K,log}''(n)$) der diskreten Werte der Kanalimpulsantwort ($I_K(n)$),
- Bestimmen des Betrags (max_I (anzahl)) (S112) und der zeitlichen Lage (max_n(anzahl)) (S113) des lokalen Maximums, falls die erste Ableitung Null und die zweite Ableitung negativ ist,
- Bestimmen der exakten zeitlichen Lage (max_n (anzahl)) (S114) des lokalen Maximums über lineare Interpolation der ersten Ableitung mittels dreier diskreter Werte ($I_{K,log}(n)$, $I_{K,log}(n+1)$, $I_{k,log}(n+2)$) sowie des zugehörigen Betrages (max_I(anzahl)) (S115) des lokalen Maximums, falls das Produkt der ersten Ableitungen an zwei benachbarten Stützstellen ($n$, $n+1$) und die zweite Ableitung negativ sind, und
- Sortieren (S116) der Beträge (max_I (anzahl)) und der zeitlichen Lagen (max_n(anzahl)) der gefundenen lokalen Maxima, wenn der Suchvorgang abgeschlossen ist.

12. Verfahren nach Anspruch 11,
**dadurch gekennzeichnet,**
**daß** nach Bestimmen der lokalen Maxima der Kanalimpulsantwort ($I_K(n)$) und dem Umrechnen der zeitlichen Lagen in dazu korrespondierende Entfernungen ein Darstellen der einzelnen diskreten Stützstellen-Werte der Kanalimpulsantwort ($I_K(n)$) und der lokalen Maxima der Kanalimpulsantwort ($I_K(n)$) in graphischer und/oder tabellarischer Form erfolgt.

13. Digitales Speichermedium mit elektronisch auslesbaren Steuersignalen, die so mit einem programmierbaren Computer-oder digitalen Signalprozessor zusammenwirken, daß das Verfahren nach einem der Ansprüche 1 bis 12 ausgeführt wird.

14. Computerprogramm-Produkt mit auf einem maschinenlesbaren Träger gespeicherten Programmcode-Mitteln, um alle Schritte gemäß einem der Ansprüche 1 bis 12 durchzuführen, wenn das Programm auf einem Computer oder einem digitalen Signalprozessor ausgeführt wird.

15. Computerprogramm mit Programmcode-Mitteln, um alle Schritte gemäß einem der Ansprüche 1 bis 12 durchführen zu können, wenn das Programm auf einem Computer oder einem digitalen Signalprozessor ausgeführt wird.

**Claims**

1. Method for the identification of obstacles in a transmission channel by means of propagation-delay measurement through analysis of the channel impulse response ($I_k(n)$) of the transmission channel (2) using a time-discrete adaptive equaliser (21), which is connected in series to the transmission channel (2), which it equalises, with the following procedural stages:

   - determination (S100) of the IIR filter coefficients ($a_n$) of a recursive filter portion (23) and the FIR filter coefficients ($b_n$) of a non-recursive filter portion (22) of the time-discrete adaptive equaliser (21),
   - assignment (S101) of a first input vector (A(n)) pre-assigned with zeros with the index-corresponding IIR filter coefficients ($a_n$) and of a second input vector (B(n)) pre-assigned with zeros with the index-corresponding FIR filter coefficients ($b_n$), wherein the first vector element (A(0)) of the first input vector (A(n)) is defined with the value 1,
   - determination (S102) of a first output vector (A'(n)) from the first input vector (A(n)) and of a second output vector (B'(n)) from the second input vector (B(n)), in each case using the discrete Fourier transform,
   - formation (S102) of the discrete channel transmission function ($H_k(n)$) by dividing the first output vector (A'(n)) by the second output vector (B'(n)) and
   - determination (S105) of the discrete channel impulse response ($I_k(n)$) from the discrete channel transmission function ($H_k(n)$) using the inverse discrete Fourier transform,
   - determination (S107) of local maxima of the channel impulse response ($I_k(n)$) according to location in time and
   - conversion of the locations in time of the local maxima into corresponding distances of the obstacles relative to the position of a measurement receiver containing the equaliser (21) by multiplication by the transmission rate.

2. Method according to claim 1,
   **characterised in that**
   the first output vector A'(n) is formed through the discrete Fourier transform of the first input vector A(n) assigned with the IIR filter coefficients using the formula:

$$A'(n) = \frac{1}{N_F} \cdot \sum_{k=0}^{N_F-1} A(k) \cdot e^{-j \cdot 2\pi k \cdot n / N_F} \ \text{ for } \ 0 \ <= \ n \ < \ N_F$$

   that the second output vector B' (n) is formed through the discrete Fourier transform of the second input vector B(n) assigned with the FIR filter coefficients using the formula:

$$B'(n) = \frac{1}{N_F} \cdot \sum_{k=0}^{N_F-1} B(k) \cdot e^{-j \cdot 2\pi k \cdot n / N_F} \ \text{ for } \ 0 \ <= \ n \ < \ N_F$$

   and the channel transmission function $H_k(n)$ is formed using the formula:

$$H_k(n) \ = \ A'(n) \ / \ B'(n) \qquad \text{for } 0 \ <= \ n \ < \ N_F$$

   wherein

   $N_F$ the number of sampled values for the discrete Fourier transform,
   n the index, which determines the interpolation points of the output vectors, and
   k the index, which determines the interpolation points of the input vectors.

3. Method according to any one of claims 1 to 2,
   **characterised in that**

the complex channel impulse response $I_k(n)$ is formed using the formula:

$$I_k(n) = \sum_{k=0}^{N_F-1} H_k(k) \cdot e^{j \cdot 2\pi k \cdot n / N_F}$$

wherein

$H_K(n)$ the channel transmission function,
$N_F$ the number of sampled values for the discrete Fourier transform,
k the discrete frequency values, and
n the index, which determines the sampled values of the channel impulse response.

**4.** Method according to any one of claims 1 to 3,
**characterised in that**
after the determination (S105) of the channel impulse response ($I_k(n)$), the procedural stages of formation of the absolute-number, logarithmation and scaling (S106) of the channel impulse response $I_k(n)$ are implemented.

**5.** Method according to claim 4
**characterised in that**
the formation of the absolute-number and logarithmation of the complex channel impulse response $I_k(n)$ are implemented using the formula:

$$I_{k,log,\ unscaled}(n) = 20 * log_{10}(|Ik(n)|)$$

**6.** Method according to claim 5
**characterised in that**
the scaling of the discrete channel impulse values $I_k(n)$ is formed by seeking the largest sampled value in terms of an absolute number $I_{k,log,\ unscaled,max}(n)$ using the following function:

$$I_{k,log,\ unscaled,max}(n) = max\{I_{k,log,unscaled}(n)\}$$

and subsequent calculation using the formula:

$$I_{k,log}(n) = I_{k,log,\ unscaled}(n) - I_{k,log,\ unscaled,max}(n).$$

**7.** Method according to any one of claims 1 to 6,
**characterised in that**,
before the determination (S105) of the channel impulse response $I_k(n)$, a weighting (S104) of the channel transmission function $H_k(n)$ with a window function $F(n)$ is implemented in order to obtain a frequency-band-limited channel transmission function $H_k'(n)$ using the formula:

$$H_k'(n) = H_k(n) \cdot F(n).$$

**8.** Method according to claim 7
**characterised in that**
the function

$$F(n) = 0 \quad for\ 0 <= n < n_1$$

Table continued

$$F(n) = 0 \quad \text{for } n_2 < n < N_F$$
$$F(n) \neq 0 \quad \text{for } n_1 <= n <= n_2$$

is selected as the window function, wherein

n the discrete frequency index,
$N_F$ the number of sampled values for the discrete Fourier transform,
$n_1$ the lower threshold frequency of the window function, dependent upon the modulation type of the signal to be transmitted, and
$n_2$ the upper threshold frequency of the window function, dependent upon the modulation type of the signal to be transmitted.

**9.** Method according to claim 8,
**characterised in that**
the window function F(n) is formed using the formula:

$$F(n) = a - b \cdot \cos\left(2\pi \cdot \frac{n - n_1}{n_2 - n_1}\right) + c \cdot \cos\left(4\pi \cdot \frac{n - n_1}{n_2 - n_1}\right)$$

for $n_1 <= n <= n_2$,
wherein

n the discrete frequency value,
a,b,c freely selectable parameters determining the form of the window function,
$n_1$ the lower threshold frequency of the window function, dependent upon the modulation type of the signal to be transmitted, and
$n_2$ the upper threshold frequency of the window function, dependent upon the modulation type of the signal to be transmitted.

**10.** Method according to any one of claims 4 to 6,
**characterised in that**
after the formation of the absolute-number, logarithmation and scaling (S106) of the channel impulse response ($I_k$(n)), a determination (S107) of the local maxima of the scaled, sampled values of the channel impulse response ($I_k$(n)) is implemented according to absolute number.

**11.** Method according to claim 10,
**characterised in that**
the determination (S107) of the local maxima of the scaled sampled values of the channel impulse response ($I_k$(n)) comprises the following procedural stages:

- formation (S110) of the first derivation ($I_{k,log}$'(n)) of the discrete values of the channel impulse response ($I_k$(n)),
- formation (S111) of the second derivation ($I_{k,log}$'' (n)) of the discrete values of the channel impulse response ($I_k$(n)),
- determination of the absolute number (max_I(number)) (S112) and the location in time (max_n(number)) (S113) of the local maximum, if the first derivation is zero and the second derivation is negative,
- determination of the exact location in time (max_n(number)) (S114) of the local maximum via linear interpolation of the first derivation by means of three discrete values ($I_{k,log}$(n), $I_{k,log}$ (n+1) , $I_{k,log}$(n+2)), and of the associated absolute number (max_I (number)) (S115) of the local maximum, if the product of the first derivations at two adjacent interpolation points (n, n+1) and the second derivation are negative, and
- sorting (S116) of the absolute numbers (max_I(number)) and the locations in time (max_n(number)) of the local maxima found, when the search procedure is concluded.

**12.** Method according to claim 11,

**characterised in that**,
after the determination of the local maxima of the channel impulse response ($I_k$(n)) and the conversion of the locations in time into corresponding distances, a presentation of the individual discrete interpolation-point values of the channel impulse response ($I_k$(n)) and of the local maxima of the channel impulse response ($I_k$(n)) takes place in graphic and/or tabular form.

13. Digital storage medium with electronically-readable control signals, which cooperate with a programmable computer or digital signal processor in such a manner that the method according to any one of claims 1 to 12 is realised.

14. Computer software product with program-code means stored on a machine-readable medium, for the implementation of all stages according to any one of claims 1 to 12, when the software is run on a computer or a digital signal processor.

15. Computer software with program-code means for the implementation of all stages according to any one of claims 1 to 12, when the software is run on a computer or a digital signal processor.

**Revendications**

1. Procédé pour l'identification d'obstacles dans un canal de transmission au moyen de mesure de la durée de parcours par l'analyse de la réponse en impulsion de canal ($I_K$(n)) du canal de transmission (2) moyennant l'utilisation d'un correcteur adaptatif (21) discret en temps, qui est monté en aval du canal de transmission (2) et corrige ce dernier, avec les étapes de procédé suivantes:

- Détermination (S100) des coefficients de filtrage IIR ($a_n$) d'un composant de filtrage récursif (23) et des coefficients de filtrage FIR ($b_n$) d'un composant de filtrage non récursif (22) du correcteur (21) adaptatif discret en temps,
- Occupation (S101) d'un premier vecteur d'entrée (A(n)) initialisé par des zéros avec les coefficients de filtrage IIR ($a_n$) correspondant à l'indice et d'un deuxième vecteur d'entrée (B(n)) initialisé par des zéros avec les coefficients de filtrage FIR ($b_n$) correspondant à l'indice, sachant que le premier élément de vecteur (A(0)) du premier vecteur d'entrée (A(n)) est occupé par la valeur 1,
- Détermination (S102) d'un premier vecteur de sortie (A' (n)) à partir du premier vecteur d'entrée (A(n)) et d'un deuxième vecteur de sortie (B' (n)) à partir du deuxième vecteur d'entrée (B(n)), chaque fois moyennant l'utilisation de la transformation de Fourier discrète,
- Formation (S102) de la fonction discrète de transmission du canal ($H_K$(n)) par division du premier vecteur de sortie (A'(n)) par le deuxième vecteur de sortie (B'(n)) et
- Détermination (S105) de la réponse impulsionnelle du canal ($I_K$(n)) à partir de la fonction discrète de transmission du canal ($H_K$(n)) moyennant l'utilisation de la transformation de Fourier discrète inverse,
- Détermination (S107) des maxima locaux de la réponse impulsionnelle du canal ($I_K$ (n)) d'après la position chronologique et
- Conversion des positions chronologiques des maxima locaux en les éloignements correspondants des obstacles par rapport à la position d'un récepteur de mesure contenant le correcteur (21), par multiplication par la vitesse de transmission.

2. Procédé selon la revendication 1,
   **caractérisé en ce que**
   le premier vecteur de sortie A'(n) est formé par une transformation de Fourier discrète du premier vecteur d'entrée A(n) occupé par les coefficients de filtrage IIR, par la formule

$$A'(n) = \frac{1}{N_F} \cdot \sum_{k=0}^{N_F-1} A(k) \cdot e^{-j2\pi kn/N_F}$$

pour $0 \leq n < N_F$,

**en ce que** le deuxième vecteur de sortie B'(n) est formé par une transformation de Fourier discrète du deuxième vecteur d'entrée B(n) occupé par les coefficients de filtrage FIR, par la formule

$$B'(n) = \frac{1}{N_F} \cdot \sum_{k=0}^{N_F-1} B(k) \cdot e^{-j2\pi \cdot n/N_F} \qquad \text{pour } 0 \le n < N_F$$

et **en ce que** la fonction de transmission du canal $H_K(n)$ est formée conformément à la formule

$$H_K(n) = A'(n) / B'(n) \qquad \text{pour } 0 \le n < N_F$$

dans lesquelles

$N_F$ signifie le nombre de valeurs de lecture pour la transformation de Fourier discrète,
n signifie l'indice qui détermine les valeurs de référence des vecteurs de sortie et
k signifie l'indice qui détermine les valeurs de référence des vecteurs d'entrée.

**3.** Procédé selon la revendication 1 ou 2,
**caractérisé en ce que**
la réponse impulsionnelle complexe du canal $I_K(n)$ est formée conformément à la formule

$$I_K(n) = \sum_{k=0}^{N_F-1} H_K(k) \cdot e^{j2\pi \cdot n/N_F}$$

dans laquelle

$H_K(n)$ signifie la fonction de transmission du canal,
$N_F$ signifie le nombre de valeurs de lecture pour la transformation de Fourier discrète,
k signifie les valeurs discrètes de fréquence et
n signifie l'indice qui détermine les valeurs de lecture de la réponse impulsionnelle du canal.

**4.** Procédé selon l'une des revendications 1 à 3,
**caractérisé en ce que**
après la détermination (S105) de la réponse impulsionnelle du canal ($I_K(n)$) suivent comme étapes du procédé la formation de la valeur absolue, la formation du logarithme et la normalisation (S106) de la réponse impulsionnelle du canal $I_K(n)$.

**5.** Procédé selon la revendication 4,
**caractérisé en ce que**
la formation de la valeur absolue et la formation du logarithme de la réponse impulsionnelle complexe du canal $I_K(n)$ sont formées conformément à la formule

$$I_{K,\log,\text{unnormiert}}(n) = 20 * \log_{10}(|I_K(n)|).$$

**6.** Procédé selon la revendication 5,
**caractérisé en ce que**
la normalisation des valeurs impulsionnelles discrètes du canal $I_K(n)$ est formée par la recherche de la valeur de lecture la plus grande en valeur absolue $I_{K,\log,\text{unnormiert},\max}(n)$ conformément à la fonction suivante $I_{K,\log,\text{unnormiert},\max}(n) = \max\{I_{K,\log,\text{unnormiert}}(n)\}$ suivie du calcul conformément à la formule

$$I_{K,\log}(n) = I_{K,\log,\text{unnormiert}}(n) - I_{K,\log,\text{unnormiert},\max}(n).$$

**7.** Procédé selon l'une des revendications 1 à 6,

**caractérisé en ce que**
avant la détermination (S105) de la réponse impulsionnelle du canal $I_K(n)$, une pondération (S104) de la fonction de transmission du canal $H_K(n)$ s'effectue avec une fonction de fenêtre F(n) pour l'obtention d'une fonction de transmission du canal $H_K'(n)$ limitée en bande de fréquence conformément à la formule

$$H_K'(n) = H_K(n) \cdot F(n).$$

8. Procédé selon la revendication 7,
**caractérisé en ce que**
comme fonction de fenêtre F(n), on choisit la fonction

$$F(n) = 0 \quad \text{pour } 0 <= n < n_1$$
$$F(n) = 0 \quad \text{pour } n_2 < n < N_F$$
$$F(n) \neq 0 \quad \text{pour } n_1 <= n <= n_2$$

dans laquelle

n signifie l'indice discret de la fréquence,
$N_F$ signifie le nombre des valeurs de lecture pour la transformation de Fourier discrète,
$n_1$ signifie la fréquence limite inférieure de la fonction de fenêtre, dépendant du genre de modulation du signal à transmettre
$n_2$ signifie la fréquence limite supérieure de la fonction de fenêtre, dépendant du genre de modulation du signal à transmettre.

9. Procédé selon la revendication 8,
**caractérisé en ce que**
la fonction de fenêtre F(n) est formée conformément à la formule

$$F(n) = a - b \cdot \cos\left(2\pi \cdot \frac{n - n_1}{n_2 - n_1}\right) + c \cdot \cos\left(4\pi \cdot \frac{n - n_1}{n_2 - n_1}\right)$$

pour $n_1 <= n <= n_2$
dans laquelle

n signifie la valeur discrète de la fréquence,
a, b, c, signifient des paramètres pouvant être choisis librement pour la détermination de la forme de la fonction de fenêtre,
$n_1$ signifie la fréquence limite inférieure de la fonction de fenêtre, dépendant du genre de modulation du signal à transmettre et
$n_2$ signifie la fréquence limite supérieure de la fonction de fenêtre, dépendant du genre de modulation du signal à transmettre.

10. Procédé selon l'une des revendications 4 à 6,
**caractérisé en ce que**
après la formation de la valeur absolue, la formation du logarithme et la normalisation (S106) de la réponse impulsionnelle du canal ($I_K(n)$), il suit une détermination (S107) des maxima locaux des valeurs de lecture normalisées de la réponse impulsionnelle du canal ($I_K(n)$) d'après la valeur absolue.

11. Procédé selon la revendication 10,
**caractérisé en ce que**
la détermination (107) des maxima locaux des valeurs de lecture normalisées de la réponse impulsionnelle du canal

($I_K(n)$) comprend les étapes de procédé suivantes:

- Formation (S110) de la première dérivée ($I_{K,log}'$ (n)) des valeurs discrètes de la réponse impulsionnelle du canal ($I_K(n)$),
- Formation (S111) de la deuxième dérivée ($I_{K,log}''(n)$) des valeurs discrètes de la réponse impulsionnelle du canal ($I_K(n)$),
- Détermination de la valeur absolue (max_I(anzahl)) (S112) et de la position chronologique (max_n(anzahl)) (S113) du maximum local, si la première dérivée est nulle et que la deuxième dérivée est négative,
- Détermination de la position chronologique exacte (max_n(anzahl)) (S114) du maximum local par interpolation linéaire de la première dérivée au moyen de trois valeurs discrètes ($I_{K,log}$ (n), $I_{K,log}(n+1)$, $I_{K, log}(n+2)$) ainsi que de la valeur absolue correspondante (max_I(anzahl)) (S115) du maximum local, si le produit des premières dérivées en deux points de référence voisins (n, n+1) et la deuxième dérivée sont négatifs, et
- Classement (S116) des valeurs absolues (max_I(anzahl)) et des positions chronologiques (max_n(anzahl)) des maxima locaux trouvés, quand le processus de recherche est terminé.

**12.** Procédé selon la revendication 11,
**caractérisé en ce que**
après la détermination des maxima locaux de la réponse impulsionnelle du canal ($I_K(n)$) et la conversion des positions chronologiques en éloignements correspondant à ces dernières, il s'effectue une représentation des différentes valeurs discrètes des points de référence de la réponse impulsionnelle du canal ($I_K(n)$) et des maxima locaux de la réponse impulsionnelle du canal ($I_K(n)$) sous forme graphique et/ou de tableau.

**13.** Support de données numériques avec des signaux de commande, lisibles électroniquement, qui interagissent avec un ordinateur ou un processeur numérique de signaux programmable de telle sorte que le procédé, selon l'une des revendications 1 à 12, soit exécuté.

**14.** Produit de programme pour ordinateur avec des moyens de code de programme enregistrés sur un support exploitable par une machine, pour exécuter toutes les étapes, selon l'une des revendications 1 à 12, quand le programme est exécuté sur un ordinateur ou un processeur de signaux numérique.

**15.** Programme pour ordinateur avec des moyens de code de programme pour pouvoir exécuter toutes les étapes, selon l'une des revendications 1 à 12, quand le programme est exécuté sur un ordinateur ou un processeur de signaux numérique.

| # | Wert | Position | # | Wert | Position |
|---|------|----------|---|------|----------|
| 1 | -19.8 dB | 2.501 µs | 6 | --.-- dB | --.-- µs |
| 2 | -30.1 dB | -1.000 µs | 7 | --.-- dB | --.-- µs |
| 3 | --.-- dB | --.-- µs | 8 | --.-- dB | --.-- µs |
| 4 | --.-- dB | --.-- µs | 9 | --.-- dB | --.-- µs |
| 5 | --.-- dB | --.-- µs | 10 | --.-- dB | --.-- µs |

| # | Wert | Position | # | Wert | Position |
|---|------|----------|---|------|----------|
| 1 | -19.8 dB | 2.501 µs | 6 | --.-- dB | --.-- µs |
| 2 | -30.2 dB | -1.001 µs | 7 | --.-- dB | --.-- µs |
| 3 | --.-- dB | --.-- µs | 8 | --.-- dB | --.-- µs |
| 4 | --.-- dB | --.-- µs | 9 | --.-- dB | --.-- µs |
| 5 | --.-- dB | --.-- µs | 10 | --.-- dB | --.-- µs |

Fig. 1

Sender $H_S(f)$    Übertragungskanal $H_K(f)$    Empfänger $H_E(f)$

Fig. 2

Fig. 3

Ermitteln der Filterkoeffizienten
$a_n$ $(0 < n \le k\_IIR)$ und $b_n$ $(0 \le n \le k\_FIR)$
des adaptiven Entzerrers

S100

Belegen der Vektoren A und B mit
den Filterkoeffizienten:

$A(0) = 1$
$A(n) = a_n \qquad 0 < n \le k\_IIR$
$A(n) = 0 \qquad k\_IIR < n < N_F$
$B(n) = b_n \qquad 0 \le n \le k\_FIR$
$B(n) = 0 \qquad k\_FIR < n < N_F$

S101

Durchführen der schnellen Fourier-Transformation:
$A'(n) = FFT \{A(n)\} \quad 0 \le n < N_F$
$B'(n) = FFT \{B(n)\} \quad 0 \le n < N_F$

Bestimmen der Kanal-Übertragungsfunktion:

$H_K(n) = \dfrac{A'(n)}{B'(n)} \quad 0 \le n < N_F$

S102

Bestimmen einer geeigneten Fensterfunktion
$F(n)$ :
$F(n) = 0 \qquad 0 \le n < n_1$
$F(n) = 0 \qquad n_2 < n < N_F$
$F(n) \ne 0 \qquad n_1 \le n \le n_2$

S103

Gewichten des Frequenzspektrums der
Übertragungsfunktion mittels Multiplikation
mit Fensterfunktion:
$H_K'(n) = H_K(n) \cdot F(n) \quad 0 \le n < N_F$

S104

Bestimmen der Kanal-Impulsantwort mittels
inverser schneller Fourier-Transformation:
$I_K(n) = IFFT \{H_K'(n)\} \quad 0 \le n < N_F$

S105

**Fig. 4a**

Betragsbildung, Logarithmierung und Normierung
der Abtastwerte der Kanal-Impulsantwort:

$$I_{K, log, unnormiert}(n) = 20 * log_{10}(|I_K(n)|)$$

$$I_{K, log, unnormiert, max} = max\{I_{K, log, unnormiert}(n)\}$$

$$I_{K, log, normiert}(n) = I_{K, log, unnormiert}(n) - I_{K, log, unnormiert, max}$$

S106

Bestimmen der lokalen Maximas der
$I_{K, log}(n)$ nach Betrag und zeitl. Lage

Umrechnen der zeitl. Lagen der Maximas von $I_{K, log}(n)$ in Entfernungen

Darstellung der Impulse $I_{K, log}(n)$ $(0 \leq n < N_F)$ nach Betrag u. Lage

S107

## Fig. 4b

S110

$$I'_{K, log}(n) = I_{K, log}(n+1) - I_{K, log}(n)$$

{ erste Ableitung bilden

S111

$$I''_{K, log}(n) = I'_{K, log}(n+1) - I'_{K, log}(n)$$

{ zweite Ableitung bilden

anzahl = 0; n = 0

S116

$n < N_F - 2 ?$ — Nein → max_l(n) und max_n(n) sortieren

Ja

{ genaue Position eines lokalen
Maximums bereits gefunden

$I'_{K, log}(n) = 0$ und
$I''_{K, log}(n) < 0$ — Ja

S112

max_l(anzahl) = $I_{K, log}(n)$

S113

max_n(anzahl) = n + 0.5

anzahl = anzahl + 1

Nein

$I'_{K, log}(n) * I'_{K, log}(n+1) < 0$
und $I''_{K, log}(n) < 0 ?$
Yes

Ja

— Nein

{ Vorzeichenwechsel in der ersten
Ableitung? wenn ja, entspricht
dieser einem lokalen Maximum?

S114

$$abl\_links = 10^{I_{K, log}(n+1)/20} - 10^{I_{K, log}(n)/20}$$

$$abl\_rechts = 10^{I_{K, log}(n+2)/20} - 10^{I_{K, log}(n+1)/20}$$

$$max\_n(anzahl) = n - \frac{abl\_links}{abl\_rechts - abl\_links} + 0.5$$

{ Festlegen von 2
Stützstellen im linearen
Bereich

{ lineare Interpolation des
Verlaufs $I'_{K, log}(n)$
zwischen den beiden
Stützstellen $I'_{K, log}(n)$ und
$I'_{K, log}(n+1)$, um genaue
Stelle zu finden, an der
gilt: $I'_{K, log}(max\_n) = 0$

max_l(anzahl) = $I_{K, log}(n)$

S115

anzahl = anzahl + 1

n = n + 1

## Fig. 5